# EUROPÄISCHE PATENTSCHRIFT

(11) **EP 3 150 753 B1**
(45) Veröffentlichungstag und Bekanntmachung des Hinweises auf die Patenterteilung: **08.01.2020**
(21) Anmeldenummer: 15187647.1
(22) Anmeldetag: 30.09.2015
(51) Int. Cl.: D01G 25/00

(54) **VORRICHTUNG ZUM FÖRDERN EINER FLORBAHN ODER EINES VLIESES**
APPARATUS FOR CONVEYING A FIBROUS WEB OR A NONWOVEN FABRIC
DISPOSITIF POUR FAIRE AVANCER UN VOILE OU UNE NAPPE DE NON-TISSÉ

(43) Veröffentlichungstag der Anmeldung: 05.04.2017
(73) Patentinhaber: Oskar Dilo Maschinenfabrik KG, 69412 Eberbach (DE)
(72) Erfinder: Dilo, Johann Philipp, 69412 Eberbach (DE)
(74) Vertreter: Wächter, Jochen

(56) Entgegenhaltungen:
- EP-A1- 1 947 223
- EP-A1- 2 479 321
- EP-A1- 2 806 055

## Beschreibung

Die vorliegende Erfindung betrifft eine Vorrichtung zum Fördern einer Florbahn oder eines Vlieses.

Bei der Herstellung von Vliesstoffen kann es vor allem bei hohen Produktionsgeschwindigkeiten von > 100 m/min sinnvoll sein, ein Abdeckmittel zum Abdecken der auf einer Transportvorrichtung beförderten Flor- oder Vliesbahn vorzusehen und somit eine Verblasung des Flors zu verhindern.

Beispielsweise wurde eine solche Technologie bislang in Vlieslegern angewendet. Vliesleger dienen dazu, die von einer Krempel erzeugte Florbahn möglichst gleichmäßig auf einem Abliefertransportband in mehrlagigen Schichten zu einem Vlies abzulegen. Dabei wird die Florbahn üblicherweise zunächst durch einen Oberwagen und von dort zu einem Legewagen geführt, durch dessen Ablegespalt die Florbahn auf das Abliefertransportband abgelegt wird. Zur Führung der Florbahn durch den Vliesleger dienen mindestens zwei Flortransportbänder. Die Bewegungen der Flortransportbänder, des Oberwagens und des Legewagens werden aufeinander abgestimmt gesteuert.

Von dem Einlaufbereich des Vlieslegers hin zum Oberwagen ist es vorteilhaft, wenn die Florbahn nicht nur auf einem Flortransportband aufliegt, sondern von oben von einem Abdeckband eingeschlossen wird. Auf diese Weise kann die Verblasung der Florbahn verhindert und somit die Gleichmäßigkeit des abgelegten Vlieses sichergestellt werden. Derartige Strukturen sind beispielsweise aus DE 195 43 623 A1, EP 1 136 600 A1 oder EP 1 870 499 B1 bekannt. Nachteilig an diesen Ausgestaltungen eines Vlieslegers ist die Komplexität der Führung des umlaufenden Abdeckbandes, welche eine Vielzahl von Bauteilen und großen mechanischen Aufwand erfordert.

Die EP 2 479 321 A1 offenbart eine vereinfachte Konstruktion eines Vlieslegers, bei dem das Abdeckband glatt ausgebildet ist und nicht mit der Florbahn mitbewegt wird, sondern als quasi stationäre Abdeckung der Florbahn dient. Um zu gewährleisten, dass das Abdeckband die Florbahn möglichst lange auf dem Flortransportband einschließt, verläuft das Abdeckband von einer Befestigungsstelle im Einlaufbereich des Vlieslegers durch den Oberwagen hindurch hin zu einer zweiten Befestigungsstelle am anderen Ende des Vlieslegers.

Nachteilig an dieser Ausgestaltung ist es wiederum, dass es zu hohen Relativgeschwindigkeiten zwischen dem stationären Abdeckband und dem in Querrichtung hin und her bewegten Oberwagen kommt, wenn das Abdeckband durch den Oberwagen hindurchgeschleift wird. Daraus resultieren insbesondere im Bereich der Umlenkstelle im Oberwagen eine starke Belastung und ein erhöhter Verschleiß des Abdeckbandes.

Der vorliegenden Erfindung liegt die Aufgabe zugrunde, eine Vorrichtung zum Fördern einer Florbahn oder eines Vlieses zu schaffen, die auch bei hohen Geschwindigkeiten eine Verblasung der Flor- oder Vliesbahn verhindert und zudem eine effektive Ableitung von mitgeführter Schleppluft gewährleistet.

Diese Aufgabe wird durch die Merkmale des Anspruchs 1 gelöst.

Erfindungsgemäß umfasst die Vorrichtung zum Fördern einer Florbahn oder eines Vlieses eine Transportvorrichtung, die als Auflage für die Florbahn oder das Vlies dient und die über einen Antrieb in einer Transportrichtung mit einer Geschwindigkeit von mindestens 50 m/min angetrieben ist, wobei die Transportvorrichtung rau ausgebildet ist und aufgrund von Reibkräften die darauf liegende Florbahn oder das Vlies mitbewegt. Außerdem ist eine Schar von über der Transportvorrichtung angeordneten Linearelementen zum Abdecken der auf der Transportvorrichtung aufliegenden Florbahn oder des Vlieses vorgesehen, wobei die Linearelemente glatt ausgebildet sind und die Florbahn oder das Vlies an einer Unterseite der Linearelemente entlang bewegt wird, wobei die Linearelemente in einer Richtung quer zur Transportrichtung nebeneinander, aber zueinander beabstandet, angeordnet sind.

Mit dieser Ausgestaltung kann eine Beschädigung der Flor- oder Vliesbahn durch Verblasung oder durch Faltenbildung verhindert werden und gleichzeitig wird für eine effektive Ableitung von mitgeführter Luft Sorge getragen. Auf diese Weise lassen sich hohe Transportgeschwindigkeiten der Flor- oder Vliesbahn erzielen.

Erfindungsgemäß sind die Linearelemente in Transportrichtung verlaufend und parallel zueinander angeordnet. Auf diese Weise kann die Flor- oder Vliesbahn besonders schonend an der Unterseite der Linearelemente entlang geführt werden.

Die Linearelemente weisen vorzugsweise eine Breite von 1 mm bis 5 mm auf. Die Linearelemente sind vorzugsweise in einem Abstand von 2 mm bis 50 mm, mehr bevorzugt 10 mm bis 30 mm, zueinander angeordnet.

In einer bevorzugten Ausführungsform sind die Linearelemente zwischen zwei Führungsmitteln gespannt.

Die Linearelemente können als schmale Riemen, Garne, Schnüre, Litzen oder Drähte ausgebildet sein. Im Betrieb sind die Linearelemente vorzugsweise in einem Abstand von 0,1 mm bis 100 mm, mehr bevorzugt 0,5 mm bis 5 mm, über der Transportvorrichtung angeordnet.

Die Transportvorrichtung ist vorzugsweise als endlos umlaufendes Transportband ausgebildet.

Weitere Merkmale und Vorteile der vorliegenden Erfindung ergeben sich aus der nachfolgenden Beschreibung unter Bezugnahme auf die Zeichnungen.
- Fig. 1: ist eine schematische Querschnittsansicht eines Vlieslegers mit einer Ausführungsform der erfindungsgemäßen Vorrichtung zum Fördern einer Florbahn;
- Fig. 2: ist eine schematische Perspektivansicht der Linearelemente zur Florabdeckung aus Fig. 1 in einer leicht abgewandelten Fassung;
- Fig. 3: ist eine schematische Querschnittsansicht einer Transportstrecke zwischen Krempel und Vliesleger mit mehreren Ausführungsformen erfindungsgemäßer Vorrichtungen zum Fördern einer Florbahn;
- Fig. 4: ist eine schematische Querschnittsansicht einer einfachen Ausführungsform der erfindungsgemäßen Vorrichtung zum Fördern einer Florbahn; und
- Fig. 5: ist eine schematische Perspektivansicht eines Abschnitts der Vorrichtung zum Fördern einer Florbahn aus Fig. 4.

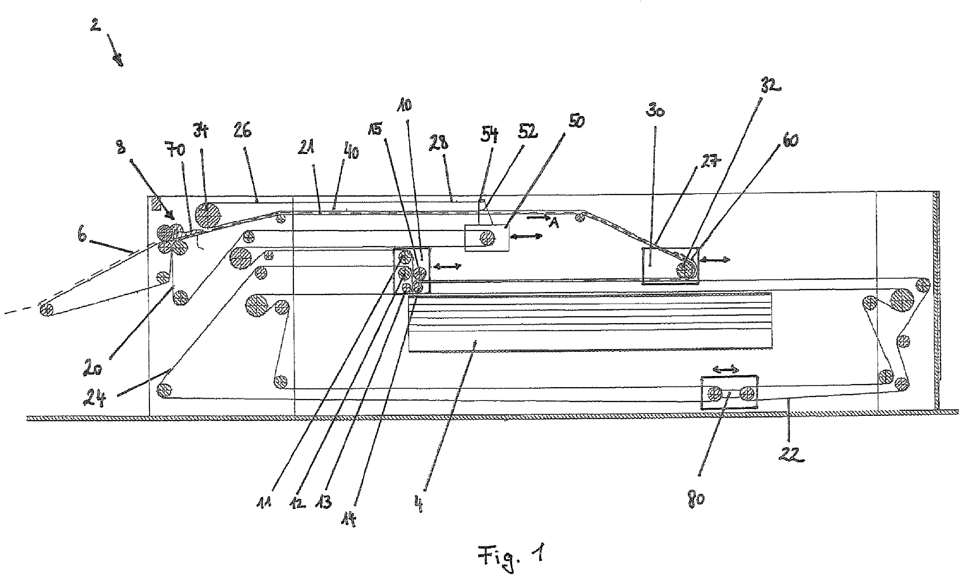

Fig. 1 ist eine schematische Querschnittsansicht eines Vlieslegers 2 mit einer Ausführungsform der erfindungsgemäßen Vorrichtung zum Fördern einer Florbahn. Man erkennt in Fig. 1 einen Vliesleger 2 mit einem endlos umlaufenden Abliefertransportband 4, das dazu bestimmt ist, ein aus einer Florbahn 6 gelegtes Vlies in einer senkrecht zur Zeichnungsebene verlaufenden Ablieferrichtung abzutransportieren. Die Florbahn 6 ist aus Übersichtlichkeitsgründen gestrichelt dargestellt und wird auf einem oberen Trum 21 einer Transportvorrichtung 20, die im Folgenden auch als erstes Flortransportband bezeichnet wird, in Richtung des Pfeils A (Transportrichtung) zugeführt.

Über dem Abliefertransportband 4 ist ein Legewagen 10 auf Schienen oder Rohren (nicht dargestellt) hin und her verfahrbar. In dem Legewagen 10 sind fünf Umlenkwalzen 11, 12, 13, 14, 15 frei drehbar gelagert. Die erste Umlenkwalze 11 und die fünfte Umlenkwalze 15 sind vom ersten Flortransportband teilumschlungen, wobei dieses derart umgelenkt wird, dass es den Legewagen 10 oberhalb eines dritten Flortransportbandes 24 verlässt. Die vierte Umlenkwalze 14 ist von einem zweiten Flortransportband 22 teilumschlungen, welches zwischen dem Oberwagen 30 und dem Legewagen 10 in dichtem Abstand zum ersten Flortransportband verläuft, an der vierten Umlenkwalze 14 um 180° umgelenkt wird und anschließend in dichtem Abstand zum Abliefertransportband 4 und über mehrere im Maschinengestell ortsfeste Umlenkwalzen wieder zum Oberwagen 30 zurückgeführt wird. Die Umlenkwalzen 12 und 13 im Legewagen 10 sind von einem dritten Flortransportband 24 teilumschlungen, welches ebenfalls in dichtem Abstand über dem Abliefertransportband 4 verläuft und über mehrere im Maschinengestell ortsfeste Umlenkwalzen zum Legewagen 10 zurückgeführt wird. Bei der dargestellten Ausführungsform eines Vlieslegers mit drei Flortransportbändern sind das zweite und das dritte Flortransportband 22, 24 in einem Bereich unterhalb des Abliefertransportbandes 4 in einem gemeinsamen Spannwagen 80 umgelenkt. Dem Fachmann sind viele weitere Ausführungsformen von Vlieslegern mit zwei oder mehreren Flortransportbändern bekannt, die sich zum Legen eines Vlieses auf ein Abliefertransportband 4 eignen und gemäß denen die Anordnung und Führung der Flortransportbänder sowie die Anordnung und Anzahl der Umlenkwalzen im Legewagen 10 und im Maschinengestell variierbar sind.

Am Legewagen 10 ist eine Kette oder ein Zahnriemen angebracht, der beispielsweise über ein mit einem Motor verbundenes Antriebszahnrad und ein Umlenkrad läuft (alle Elemente nicht dargestellt). Mithilfe dieser Antriebseinrichtungen lässt sich der Legewagen 10 oberhalb des Abliefertransportbandes 4 quer zur Ablieferrichtung hin und her verfahren.

In etwa auf selber Höhe wie der Legewagen 10 ist in dem Maschinengestell des Vlieslegers 2 der Oberwagen 30 quer zur Ablieferrichtung des Abliefertransportbandes 4 auf Schienen oder Rohren (nicht dargestellt) verfahrbar gelagert. Die Schienen oder Rohre können dieselben Schienen oder Rohre sein, auf denen auch der Legewagen 10 verfahrbar gelagert ist. Der Oberwagen 30 hat eine Umlenkwalze 32, an der das erste Flortransportband parallel zum zweiten Flortransportband 22 und in eine Richtung zum Legewagen 10 umgelenkt wird.

Von der Umlenkwalze 32 im Oberwagen 30 ausgehend verläuft das erste Flortransportband (Transportvorrichtung 20) durch den Legewagen 10 und wird von dort über mehrere Umlenkwalzen im Maschinengestell und eine in einem Spannwagen 50 gelagerte Umlenkwalze geführt, um dann wiederum über mehrere im Maschinengestell des Vlieslegers 2 ortsfest gelagerte Umlenkwalzen oberhalb des Spannwagens 50 zu laufen, bevor es den Oberwagen 30 wieder erreicht. Der Oberwagen 30 und der Spannwagen 50 können dabei über eine Kette oder einen Zahnriemen (nicht dargestellt) miteinander verbunden sein, der über ein mit einem Motor (nicht dargestellt) verbundenes Antriebszahnrad und ein Umlenkrad, die im Maschinengestell gelagert sind, läuft (nicht dargestellt). Der Spannwagen 50 ist dabei ebenfalls an Schienen oder Rohren (nicht dargestellt) verfahrbar gelagert.

In dem Bereich zwischen der Umlenkwalze 32 des Oberwagens 30 und den Umlenkwalzen 14 und 15 des Legewagens 10 sind Abschnitte des ersten Flortransportbandes und des zweiten Flortransportbandes 22 parallel zueinander in engem Abstand geführt, sodass eine vom ersten Flortransportband herangeführte Florband 6 in dem genannten Bereich zwischen dem Oberwagen 30 und dem Legewagen 10 von dem ersten Flortransportband und dem zweiten Flortransportband 22 sandwichartig eingeschlossen ist. Dabei ist die Florbahn 6 vom zweiten Flortransportband 22 abgestützt. Außerdem übernehmen die beiden sich zwischen Legewagen 10 und Maschinengestell des Vlieslegers 2 erstreckenden Abschnitte des zweiten Flortransportbandes 22 gleichzeitig auch die Funktion eines Abdeckbandes für das gelegte Vlies.

Man erkennt in Fig. 1, dass im Betrieb der Oberwagen 30 und sein zugehöriger Spannwagen 50 eine zueinander gegenläufige Bewegung ausführen. Der Spannwagen 50 dient dazu, um die Schleifenlänge des ersten Flortransportbandes konstant zu halten.

Die Bewegungen von Legewagen 10 und Oberwagen 30 sind so aufeinander abgestimmt, dass bei Zuführung der Florbahn 6 mit gleichförmiger Geschwindigkeit in den Vliesleger 2 eine gesteuerte Ablage der Florbahn 6 ohne Streckungen oder Stauchungen innerhalb des Vlieslegers 2 auf dem Abliefertransportband 4 stattfinden kann. Dabei bewegt sich der Oberwagen 30 jeweils in dieselbe Richtung, im Mittel jedoch nur halb so schnell wie der Legewagen 10. Es wird auch der Tatsache Rechnung getragen, dass der Legewagen 10 im Bereich seiner Bewegungsumkehrstellung bis zum Stillstand abgebremst und wieder beschleunigt werden muss. Wird die Florbahn 6 mit schwankender Geschwindigkeit zugeführt, etwa weil vor dem Vliesleger 2 ein zyklisch arbeitendes Streckwerk (nicht dargestellt) angeordnet ist, das ein wechselndes Flächengewicht in der Florbahn 6 zum Zwecke der Erzielung einer Querprofilierung des gelegten Vlieses erzeugt, kann mithilfe einer voneinander unabhängigen Steuerung der Bewegung von Oberwagen 30 und Legewagen 10 in bekannter Weise eine Florbahnpufferung innerhalb des Vlieslegers 2 vorgenommen werden.

Zwischen den Umlenkwalzen 13 und 14 im Legewagen 10 wird ein Spalt gebildet, der als Abgabespalt bezeichnet wird. Im Betrieb des Vlieslegers 2 sind beide Flortransportbänder 22, 24 so angetrieben, dass sie mit derselben Geschwindigkeit laufen. Die Florbahn 6 wird durch den Abgabespalt geführt und auf das Abliefertransportband 4 abgelegt.

Der Vliesleger 2 in Fig. 1 weist ein Abdeckmittel 26 auf, das einen Abdeckabschnitt 40 umfasst, der sich von einem Einlaufbereich 8 des Vlieslegers 2 bis zum Oberwagen 30 erstreckt. Der Abdeckabschnitt 40 verläuft dabei unmittelbar oberhalb des oberen Trums 21 des ersten Flortransportbandes, das in diesem Bereich als Auflagefläche für die Florbahn 6 dient und in Richtung des Pfeils A bewegt wird. Die Florbahn 6 ist somit zwischen dem oberen Trum 21 der Transportvorrichtung 20 und dem Abdeckabschnitt 40 des Abdeckmittels 26 eingeschlossen. Während das erste Flortransportband rau ausgebildet ist, ist das Abdeckmittel 26 glatt ausgebildet, sodass die Florbahn 6 an der Unterseite des Abdeckabschnitts 40 entlanggleiten kann.

Die Transportvorrichtung 20 (erstes Flortransportband) kann als luftdurchlässiges Siebband ausgebildet sein, bevorzugt aber ist sie luftundurchlässig, weist also z.B. eine gewürfelte PVC-Oberfläche auf. Weitere geeignete Material- und Gestaltungsalternativen der Transportvorrichtung 20 sind dem Fachmann bekannt. Das zweite Flortransportband 22 ist hinsichtlich Oberflächen- und Materialgestaltung vorzugsweise identisch zum ersten Flortransportband ausgebildet.

Das umlaufende erste Flortransportband (Transportvorrichtung 20) bewegt aufgrund von Reibkräften die darauf liegende Florbahn 6 mit, und der Abdeckabschnitt 40 des Abdeckmittels 26, das nicht mit der Florbahn 6 mitbewegt wird, dient als Abdeckung und verhindert so eine ungewünschte Verblasung der Florbahn 6. Die Florbahn 6 bleibt damit größtenteils frei von Turbulenzen, womit höhere Florlaufgeschwindigkeiten realisiert werden können. Mit anderen Worten ist die Florbahn 6 als Sandwich zwischen dem oberen Trum 21 der Transportvorrichtung 20 und dem Abdeckabschnitt 40 des Abdeckmittels 26 geführt, wobei sie hauptsächlich durch die Bewegung des ersten Flortransportbandes vorwärts bewegt wird und das glatte Abdeckmittel 26 keine Behinderung der Bewegung der Florbahn 6 darstellt. In jedem Fall ist zu vermeiden, dass das Abdeckmittel 26 das Entlanggleiten der Florbahn 6 behindert und Fasern an ihm hängen bleiben.

Im Oberwagen 30 ist das Abdeckmittel 26 im Bereich eines ersten Endabschnitts 27 an einer Befestigungsstelle mit dem Oberwagen 30 verbunden. Wie in Fig. 1 zu sehen ist, ist im Abschnitt zwischen dieser Befestigungsstelle des ersten Endabschnitts 27 des Abdeckmittels 26 im Oberwagen 30 und einer Übergabestelle der Florbahn 6 auf das zweite Flortransportband 22 vorzugsweise mindestens ein erstes Florbahnführungsmittel 60 vorgesehen, das die Florbahn 6 in diesem Abschnitt führt, wobei die Florbahn 6 zwischen dem ersten Florbahnführungsmittel 60 und dem ersten Flortransportband eingeschlossen ist. Das Florbahnführungsmittel 60 erstreckt sich vorteilhafterweise über den gesamten Bereich zwischen der Befestigungsstelle des Abdeckmittels 26 und der Übergabestelle der Florbahn 6 auf das zweite Flortransportband 22 und ist so nah wie möglich an das zweite Flortransportband 22 heranzuführen. Die Kontur des Florbahnführungsmittels 60 ist an den Verlauf des ersten Flortransportbandes (Transportvorrichtung 20) und der Florbahn 6 um die Umlenkwalze 32 angepasst. Geeignete Florbahnführungsmittel 60 sind dem Fachmann z.B. aus EP 1 947 223 A1 bekannt und können in Form und Anzahl entsprechend variieren, solange eine sichere Führung und Abdeckung der Florbahn 6 gewährleistet wird. Es ist dabei von besonders großem Vorteil, wenn die Befestigungsstelle des ersten Endabschnitts 27 des Abdeckmittels 26 im Oberwagen 30 an dem Florbahnführungsmittel 60 ansetzt, da in diesem Fall die Florbahn 6 bis zum Legewagen 10 nahezu durchgehend eingeschlossen ist, zunächst zwischen dem ersten Flortransportband und dem Abdeckabschnitt 40 des Abdeckmittels 26, anschließend zwischen dem ersten Flortransportband und dem Florbahnführungsmittel 60 und schließlich zwischen dem ersten Flortransportband und dem zweiten Flortransportband 22. Dadurch wird auch bei hohen Florlaufgeschwindigkeiten und hoher Beschleunigung des Oberwagens 30 eine Verblasung der Florbahn 6 unterbunden.

Ein Ausgleichsmechanismus 48 dient zum Ausgleich der beim Verfahren des Oberwagens 30 in Querrichtung sich ändernden Länge des Abdeckabschnitts 40 des Abdeckmittels 26.

In der dargestellten bevorzugten Ausführungsform wird das Abdeckmittel 26 im Einlaufbereich 8 des Vlieslegers 2 vom ersten Flortransportband weg um die Umlenkwalze 34 nach oben geleitet, sodass zumindest der zweite Endabschnitt 28 des Abdeckmittels 26 im Wesentlichen parallel zum oberen Trum 21 des ersten Flortransportbandes verläuft. Die Umlenkwalze 34 kann vorzugsweise als Scheibenwalze ausgestaltet sein.

In der Ausführungsform nach Fig. 1 ist der Ausgleichsmechanismus 48 mit Hilfe des Spannwagens 50 des ersten Flortransportbandes umgesetzt. Dazu sind am Spannwagen 50 zwei Spannkonsolen 52 vorgesehen, die seitlich an diesem angebracht sind und von diesem nach oben über das obere Trum 21 des ersten Flortransportbandes 20 abragen. Die zwei Spannkonsolen 52 sind durch eine Schiene 54 miteinander verbunden, die eine Aufnahme für den zweiten Endabschnitt 28 des Abdeckmittels 26 aufweist. Diese Ausführungsform ist besonders Platz sparend und aufwandsarm, da die Bewegung des Spannwagens 50 idealerweise schon gegenläufig mit der Bewegung des Oberwagens 30 gekoppelt ist und somit keine weiteren bewegten Maschinenteile oder Steuerungen notwendig sind.

Es versteht sich aber, dass der Fachmann auch andere Wege finden kann, den Ausgleichsmechanismus 48 umzusetzen. Beispielsweise kann der zweite Endabschnitt 28 des Abdeckmittels 26 auf einer Vorratsrolle auf- und abgerollt werden oder ein separater Spannwagen für den zweiten Endabschnitt 28 vorgesehen werden. Ebenso ist ein anderweitiger Speicher denkbar.

Um die Verblasung der Florbahn 6 auch im Einlaufbereich 8 bestmöglich zu verhindern, kann im Einlaufbereich 8 bis zu einer Stelle, an der die Florbahn 6 zwischen dem ersten Flortransportband (Transportvorrichtung 20) und dem Abdeckabschnitt 40 des Abdeckmittels 26 eingeschlossen wird, vorzugsweise ein zweites Florbahnführungsmittel 70 vorgesehen sein, das die Florbahn 6 in diesem Abschnitt führt, wobei die Florbahn 6 zwischen dem zweiten Florbahnführungsmittel 70 und dem ersten Flortransportband eingeschlossen ist. Das zweite Florbahnführungsmittel 70 erstreckt sich vorteilhafterweise vom Einlaufbereich 8 des Vlieslegers 2 bis zur Umlenkwalze 34 (bevorzugt Scheibenwalze) des Flortransportbandes 26 und so nah wie möglich an dieses heran. Bei der Gestaltung des zweiten Florbahnführungsmittels 70 kann sich der Fachmann am ersten Florbahnführungsmittel 60 orientieren, wobei die Kontur des zweiten Florbahnführungsmittels 70 an den Verlauf des ersten Flortransportbandes anzupassen ist. Zudem können weitere geeignete Florbahnführungsmittel 70, wie z.B. Abdeckbandabschnitte, verwendet werden.

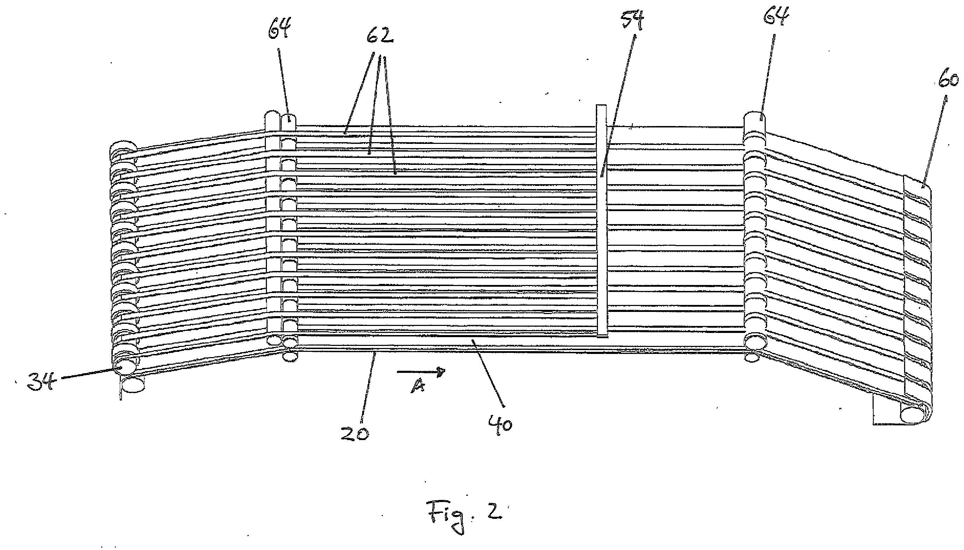

In Fig. 2 ist eine Ausgestaltung des Abdeckmittels 26 aus Fig. 1 dargestellt, wobei einige Details der Führung des Abdeckmittels 26 leicht abgewandelt sind. Das Abdeckmittel 26 ist durch eine Schar von Linearelementen 62 gebildet. Die Linearelemente 62 sind in einem Abstand über der Transportvorrichtung 20 angeordnet. Sie verlaufen parallel zueinander in Transportrichtung A der Transportvorrichtung 20 und sind quer zur Transportrichtung A nebeneinander, und zwar zueinander beabstandet, angeordnet. Die Linearelemente 62 sind vorzugsweise gespannt gehalten.

Im dargestellten Beispielsfall sind die Linearelemente 62 als schmale Riemen ausgestaltet, die beispielsweise aus dünnem Edelstahl, Kunststoff, Teflon oder beschichtetem Textilmaterial gebildet sein können. Ebenso können Schnüre, Garne, Litzen oder Drähte aus diesen Materialien als Linearelemente 62 verwendet werden. Beispielsweise können teflonisierte Drähte, kunststoffbeschichtete Drähte oder Edelstahldrähte verwendet werden. Vorzugsweise sind die Linearelemente 62 biegeschlaff. In jedem Fall müssen die Linearelemente eine glatte Oberfläche aufweisen, damit die auf der Transportvorrichtung 20 transportierte Florbahn 6 problemlos an der Unterseite der Linearelemente 62 entlang bewegt werden kann.

Die Breite der einzelnen Linearelemente liegt vorzugsweise im Bereich von 1 mm bis 5 mm. Der Abstand zwischen zwei Linearelementen 62 liegt vorzugsweise im Bereich zwischen 2 mm und 50 mm, mehr bevorzugt zwischen 10 mm und 30 mm.

Bei der Verwendung von Linearelementen 62 kann die mit der Florbahn 6 mittransportierte Luft durch die Zwischenräume zwischen den einzelnen Linearelementen 62 entweichen. Insofern muss die Transportvorrichtung 20 nicht unbedingt luftdurchlässig sein.

Im dargestellten Beispielsfall der Fig. 2 sind die Linearelemente 62 in Schlaufen um Umlenkwalzen 64 gewickelt, um an diesen Stellen einem höheren Anpressdruck der Linearelemente 62 auf die Florbahn 6 vorzubeugen. Ebenso können die Linearelemente 62 aber auch ohne Schlaufenbildung, d.h. geradlinig, geführt sein.

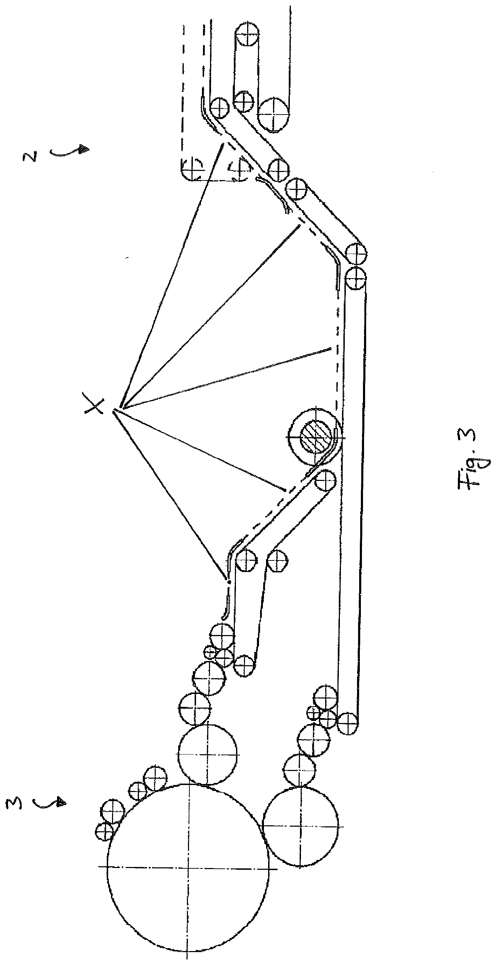

In Fig. 3 ist beispielhaft gezeigt, an welchen Stellen im Bereich zwischen Krempel 3 und Vliesleger 2 die erfindungsgemäße Vorrichtung zum Fördern einer Florbahn eingesetzt werden kann. Diese Stellen sind mit X gekennzeichnet. Die Erfindung ist zudem auch bei allen Arten von Vlieslegern anwendbar. Wie in Fig. 3 zu sehen ist, muss die Transportrichtung A der Florbahn dabei nicht zwangsläufig geradlinig verlaufen, sondern kann auch gekrümmte oder abgeknickte Abschnitte aufweisen. An den Umlenkungsstellen können besonders hohe Fliehkräfte auftreten, sodass der Einsatz der erfindungsgemäßen Vorrichtung besonders hilfreich ist.

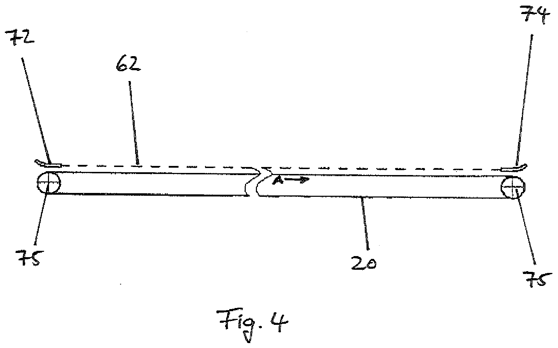

Fig. 4 zeigt eine grundlegende Ausführungsform der erfindungsgemäßen Vorrichtung zum Fördern einer Florbahn oder eines Vlieses. Die Transportvorrichtung 20 ist als endlos umlaufendes Transportband ausgebildet, das um zwei Umlenkwalzen 75 geschlungen ist, von denen zumindest eine angetrieben ist. Die Linearelemente 62 sind gestrichelt dargestellt, wobei mehrere dieser Linearelemente 62 in der Zeichenebene hintereinander angeordnet sind. Im Einlaufbereich der Florbahn oder des Vlieses ist ein Führungsmittel 72 angeordnet, an dem ein erster Endabschnitt der Linearelemente 62 befestigt ist. Ebenso ist im Auslaufbereich der Flor- oder Vliesbahn ein Führungsmittel 74 angeordnet, an dem ein zweiter Endabschnitt der Linearelemente 62 befestigt ist. Die Linearelemente 62 sind vorzugsweise zwischen den beiden Führungsmitteln 72, 74 gespannt gehalten. Vorzugsweise sind die Führungsmittel 72, 74 leicht gekrümmt, um das Einlaufen der Flor- oder Vliesbahn bzw. das Austreten der Flor- oder Vliesbahn zu unterstützen. Im Einlaufbereich der Flor- oder Vliesbahn ergibt sich somit ein sich in Transportrichtung A verjüngender Aufnahmespalt, während im Auslaufbereich der Flor- oder Vliesbahn sich ein sich in Transportrichtung A verbreitender Abgabespalt ergibt.

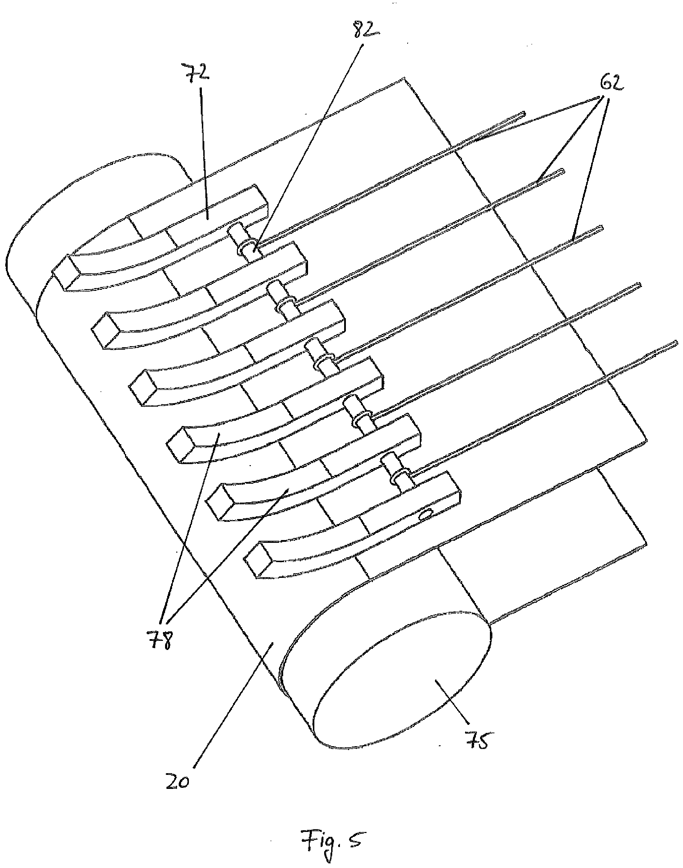

In Fig. 5 ist ein Einlaufbereich der Flor- oder Vliesbahn gemäß der Ausführungsform von Fig. 4 detaillierter dargestellt. Hierbei ist das Führungsmittel 72 durch mehrere quer zur Transportrichtung A der Flor- oder Vliesbahn und beabstandet nebeneinander angeordnete Finger 78 gebildet, die am inneren Endbereich über eine Verbindungsstange 82 miteinander verbunden sind. Die Führungsmittel 72 können aber auch als Führungsbleche, Führungswalzen etc. ausgebildet sein.

Im vorliegenden Beispielsfall der Fig. 5 sind die Linearelemente 62 als Garne ausgebildet, die jeweils in den Zwischenräumen zwischen zwei Fingern 78 an der Verbindungsstange 82 befestigt sind. Es ist jedoch auch jede andere der oben genannten Varianten der Ausgestaltung der Linearelemente 62 denkbar. Ebenso können die Linearelemente 62 auf andere Weise am Führungsmittel 72 befestigt sein.

Die Konstruktion im Auslaufbereich der Flor- oder Vliesbahn, d.h. im Bereich des Führungsmittels 74, ist vorzugsweise identisch zum Einlaufbereich ausgebildet.

Mit der erfindungsgemäßen Gestaltung einer Vorrichtung zum Fördern einer Florbahn oder eines Vlieses können mit geringem konstruktiven Aufwand hohe Laufgeschwindigkeiten realisiert werden, ohne ungewünschte Verblasungen der Flor- oder Vliesbahn zu riskieren.

In allen Fällen ist die Reibkraft zwischen Flor- oder Vliesbahn und Transportvorrichtung 20 größer als die Reibkraft zwischen Flor- oder Vliesbahn und der Schar von Linearelementen 62, bevorzugt ist auch der Reibungskoeffizient zwischen Flor- oder Vliesbahn und Transportvorrichtung 20 größer als der Reibungskoeffizient zwischen Flor- oder Vliesbahn und der Schar von Linearelementen 62.

Der Abstand der Schar von Linearelementen 62 von der Transportvorrichtung 20 ist abhängig von der zu transportierenden Flor- oder Vliesbahn und beträgt in der Regel zwischen 0,1 mm und 100 mm, vorzugsweise zwischen 0,5 mm und 5 mm. Vorzugsweise ist die Schar von Linearelementen 62 höhenverstellbar.

Die Schar von Linearelementen 62 kann sich auch nur teilweise über einen Abschnitt der Transportvorrichtung 20 erstrecken. Sie kann stationär sein, wie beispielsweise in Fig. 4 dargestellt, kann aber auch teilweise mit der Transportvorrichtung 20 mitbewegt sein, oder sogar in Abschnitten entgegengesetzt bewegt werden, wie beispielsweise in der Ausführungsform der Fig. 1 und 2 dargestellt.

Der Einsatz der erfindungsgemäßen Vorrichtung kann bei besonders feinen Fasern schon bei Transportgeschwindigkeiten der Transportvorrichtung 20 ab 50 m/min sinnvoll sein, in der Regel wird er ab einer Transportgeschwindigkeit der Transportvorrichtung 20 von mindestens 100 m/min, bevorzugt mindestens 125 m/min, mehr bevorzugt mindestens 150 m/min, besonders bevorzugt mindestens 175 m/min, besonders wichtig.

Die Transportvorrichtung 20 ist vorzugsweise als endlos umlaufendes, einstückiges Transportband ausgebildet. Sie kann aber in bestimmten Ausführungsformen auch aus mehreren nebeneinander und parallel zueinander angeordneten umlaufenden Riemen, Schnüren, Garnen, Litzen oder Drähten gebildet sein.

## Patentansprüche

1. Vorrichtung zum Fördern einer Florbahn oder eines Vlieses mit:
einer Transportvorrichtung (20), die als Auflage für die Florbahn oder das Vlies dient, und die über einen Antrieb in einer Transportrichtung (A) mit einer Geschwindigkeit von mindestens 50 m/min angetrieben ist, wobei die Transportvorrichtung (20) rau ausgebildet ist und aufgrund von Reibkräften die darauf liegende Florbahn oder das Vlies mitbewegt;
**dadurch gekennzeichnet, dass**
die Vorrichtung eine Schar von über der Transportvorrichtung (20) angeordneten Linearelementen (62) zum Abdecken der auf der Transportvorrichtung (20) aufliegenden Florbahn oder des Vlieses aufweist, wobei die Linearelemente (62) glatt ausgebildet sind und die Florbahn oder das Vlies an einer Unterseite der Linearelemente (62) entlangbewegt wird, wobei die Linearelemente (62) in Transportrichtung (A) verlaufend und parallel zueinander angeordnet sind und in einer Richtung quer zur Transportrichtung (A) nebeneinander, aber zueinander beabstandet, angeordnet sind.

2. Vorrichtung nach Anspruch 1, **dadurch gekennzeichnet, dass** die Linearelemente (62) eine Breite von 1 mm bis 5 mm aufweisen.

3. Vorrichtung nach einem der vorangehenden Ansprüche, **dadurch gekennzeichnet, dass** die Linearelemente (62) in einem Abstand von 2 mm bis 50 mm, bevorzugt 10 mm bis 30 mm, zueinander angeordnet sind.

4. Vorrichtung nach einem der vorangehenden Ansprüche, **dadurch gekennzeichnet, dass** die Linearelemente (62) zwischen zwei Führungsmitteln (72, 74) gespannt sind.

5. Vorrichtung nach einem der vorangehenden Ansprüche, **dadurch gekennzeichnet, dass** die Linearelemente (62) als schmale Riemen, Garne, Schnüre, Litzen oder Drähte ausgebildet sind.

6. Vorrichtung nach einem der vorangehenden Ansprüche, **dadurch gekennzeichnet, dass** die Linearelemente (62) in einem Abstand von 0,1 mm bis 100 mm, bevorzugt 0,5 mm bis 5 mm, über der Transportvorrichtung (20) angeordnet sind.

7. Vorrichtung nach einem der vorangehenden Ansprüche, **dadurch gekennzeichnet, dass** die Transportvorrichtung (20) als endlos umlaufendes Transportband ausgebildet ist.

## Claims

1. Apparatus for conveying a fibrous web or a nonwoven fabric, having:
a transporting apparatus (20), which serves as a support for the fibrous web or the nonwoven fabric and is driven, via a drive, in a transporting direction (A) at a speed of at least 50 m/min, wherein the transporting apparatus (20) is designed to be rough and, on account of frictional forces, carries along the fibrous web or the nonwoven fabric lying on it;
**characterized in that**
the apparatus has an array of linear elements (62), which are arranged above the transporting apparatus (20) and are intended for covering the fibrous web or the nonwoven fabric resting on the transporting apparatus (20), wherein the linear elements (62) are designed to be smooth and the fibrous web or the nonwoven fabric is moved along an underside of the linear elements (62), wherein the linear elements (62) are arranged parallel to one another so as to run in the transporting direction (A) and are arranged one beside the other, but at a distance apart from one another, in a direction transverse to the transporting direction (A).

2. Apparatus according to Claim 1, **characterized in that** the linear elements (62) have a width of 1 mm to 5 mm.

3. Apparatus according to either of the preceding claims, **characterized in that** the linear elements (62) are arranged at a distance apart from one another of 2 mm to 50 mm, preferably 10 mm to 30 mm.

4. Apparatus according to one of the preceding claims, **characterized in that** the linear elements (62) are tensioned between guide means (72, 74).

5. Apparatus according to one of the preceding claims, **characterized in that** the linear elements (62) are designed in the form of narrow belts, twines, cords, strands or wires.

6. Apparatus according to one of the preceding claims, **characterized in that** the linear elements (62) are arranged at a distance of 0.1 mm to 100 mm, preferably 0.5 mm to 5 mm, above the transporting apparatus (20).

7. Apparatus according to one of the preceding claims, **characterized in that** the transporting apparatus (20) is designed in the form of an endlessly circulating conveyor belt.

## Revendications

1. Dispositif pour faire avancer un voile ou une nappe de non-tissé comprenant :
des moyens de transport (20), qui servent de support pour le voile ou la nappe, et qui sont entraînés, au moyen d'un entraînement, à une vitesse d'au moins 50 m/mn dans une direction de transport (A), les moyens de transport (20) étant réalisés rugueux et entraînant, sous l'effet de forces de frottement, le voile ou la nappe reposant sur eux ;
**caractérisé en ce que**
le dispositif comprend un ensemble d'éléments rectilignes (62), disposés au-dessus des moyens de transport (20), servant à recouvrir le voile ou la nappe reposant sur les moyens de transport (20), alors que les éléments rectilignes (62) sont réalisés lisses et le voile ou la nappe est déplacé sur une face inférieure des éléments rectilignes (62), le long de celle-ci, les éléments rectilignes (62) étant disposés en s'étendant dans la direction de transport (A) et parallèlement entre eux et étant disposés, dans une direction transversale à la direction de transport (A), l'un à côté de l'autre, mais à distance l'un de l'autre.

2. Dispositif suivant la revendication 1, **caractérisé en ce que** les éléments rectilignes (62) présentent une largeur de 1 mm à 5 mm.

3. Dispositif suivant l'une des revendications précédentes, **caractérisé en ce que** les éléments rectilignes (62) sont disposés à une distance de 2 mm à 50 mm, de préférence 10 mm à 30 mm, de l'un à l'autre.

4. Dispositif suivant l'une des revendications précédentes, **caractérisé en ce que** les éléments rectilignes (62) sont tendus entre deux moyens de guidage (72, 74).

5. Dispositif suivant l'une des revendications précédentes, **caractérisé en ce que** les éléments rectilignes (62) sont réalisés sous forme de courroies étroites, filés, cordons, fils torsadés ou fils.

6. Dispositif suivant l'une des revendications précédentes, **caractérisé en ce que** les éléments rectilignes (62) sont disposés à une distance de 0,1 mm à 100 mm, de préférence 0,5 mm à 5 mm, au-dessus des moyens de transport (20).

7. Dispositif suivant l'une des revendications précédentes, **caractérisé en ce que** les moyens de transport (20) sont réalisés sous forme d'une bande de transport s'étendant suivant un circuit fermé sans fin.
